(19) Europäisches Patentamt / European Patent Office / Office européen des brevets

(11) **EP 3 799 160 B1**

(12) **EUROPEAN PATENT SPECIFICATION**

(45) Date of publication and mention of the grant of the patent:
**18.01.2023 Bulletin 2023/03**

(21) Application number: **20161840.2**

(22) Date of filing: **09.03.2020**

(51) International Patent Classification (IPC):
*H01M 4/136* (2010.01)   *H01M 4/36* (2006.01)
*H01M 4/58* (2010.01)   *H01M 10/0525* (2010.01)

(52) Cooperative Patent Classification (CPC):
**H01M 4/136; H01M 4/366; H01M 4/5825;**
H01M 10/0525; Y02E 60/10; Y02P 70/50

(54) **POSITIVE ELECTRODE MATERIAL FOR LITHIUM ION SECONDARY BATTERY, POSITIVE ELECTRODE FOR LITHIUM ION SECONDARY BATTERY, AND LITHIUM ION SECONDARY BATTERY**

POSITIVELEKTRODENMATERIAL FÜR EINE LITHIUM-IONEN-SEKUNDÄRBATTERIE, POSITIVELEKTRODE FÜR EINE LITHIUM-IONEN-SEKUNDÄRBATTERIE UND LITHIUM-IONEN-SEKUNDÄRBATTERIE

MATÉRIAU D'ÉLECTRODE POSITIVE POUR BATTERIE SECONDAIRE LITHIUM-ION, ÉLECTRODE POSITIVE POUR BATTERIE SECONDAIRE LITHIUM-ION ET BATTERIE SECONDAIRE LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2019 JP 2019176149**

(43) Date of publication of application:
**31.03.2021 Bulletin 2021/13**

(73) Proprietor: **Sumitomo Metal Mining Co., Ltd.**
**Tokyo 105-8716 (JP)**

(72) Inventors:
• **NOZOE, Tsutomu**
  **Tokyo, 1028465 (JP)**
• **NAKANO, Toyomasa**
  **Tokyo, 1028465 (JP)**

(74) Representative: **Müller-Boré & Partner**
**Patentanwälte PartG mbB**
**Friedenheimer Brücke 21**
**80639 München (DE)**

(56) References cited:
**EP-A1- 3 291 343     CN-A- 103 247 778**

• **QIU SHEN ET AL: "Facile synthesis and electrochemical performances of secondary carbon-coated LiFePO4-C composite for Li-ion capacitors based on neutral aqueous electrolytes", JOURNAL OF MATERIALS SCIENCE. MATERIALS IN ELECTRONICS, CHAPMAN AND HALL, LONDON, GB, vol. 27, no. 7, 18 March 2016 (2016-03-18) , pages 7255-7264, XP035974863, ISSN: 0957-4522, DOI: 10.1007/S10854-016-4692-1 [retrieved on 2016-03-18]**

**Description**

The present invention relates to a positive electrode material for a lithium ion secondary battery, a positive electrode for a lithium ion secondary battery, and a lithium ion secondary battery.

In recent years, as a small, lightweight, and high capacity battery, non-aqueous electrolyte-based secondary batteries such as lithium ion batteries have been proposed and put into practical use. A lithium ion battery is constituted of a positive electrode and a negative electrode which have a property capable of reversibly intercalating and deintercalating lithium ions, and a non-aqueous electrolyte.

Lithium ion batteries are lighter, smaller, and have higher energy than conventional secondary batteries such as lead batteries, nickel cadmium batteries, and nickel metal hydride secondary batteries, and are used as a power source in portable electronic apparatuses such as mobile phones and notebook personal computers. Recently, lithium ion batteries have also been studied as high-output power sources for electric vehicles, hybrid vehicles, electric tools and the like. High-speed charge and discharge characteristics are required for electrode active materials of the batteries which are used as the high-output power sources. In addition, an application to a large battery such as smoothing of power generation load, stationary power supply, and backup power supply is also being studied, and it is also emphasized that there is no problem of resource quantity as well as long-term safety and reliability.

Under such circumstances, for the purpose of improving electronic conductivity, Raman spectral characteristics of a positive electrode material in which the surface of the positive electrode active material is coated with a carbonaceous material have been studied (for example, Japanese Patent No. 6077206, Japanese Patent No. 6210143, Japanese Patent No. 4888411, and Japanese Patent No. 6288339).

CN 103 247 778 A describes a high-power lithium iron phosphate positive pole material and a manufacturing method thereof. Qiu Shen at al. (J. Mater. Sci.: Mater. Electron. 2016, 27, 7255-7264) describe a facile synthesis and electrochemical performances of secondary carbon-coated $LiFePO_4$-C composites for Li-ion capacitors based on neutral aqueous electrolytes. EP 3 291 343 A1 describes a positive electrode active material for a non-aqueous electrolyte secondary battery characterized by including positive electrode active material particles, and a carbonaceous coating film formed on the surface of the positive electrode active material particle and including a plurality of carbon hexagonal network planes.

In an olivine-based positive electrode material, resistance decreases as the heat treatment temperature increases until carbonization completely proceeds, and the rate characteristics are improved. However, in a case where the heat treatment temperature is too high, the olivine-based positive electrode material is decomposed and impurities are generated. Impurities generated due to the heat treatment are dissolved and re-deposited during charge and discharge and consume lithium. In addition, in a case where there is non-uniform calcination during the calcination treatment, non-uniformity of resistance occurs, resulting in non-uniformity of voltage during charge and discharge. As a result, deterioration of rate characteristics, increase of deterioration speed at the time of a cycle test, and the like occur.

The carbonization degree of carbon can be examined by a Raman spectrum. The Raman spectrum of the heat-treated carbon mainly constituted of a peak called D band present in the vicinity of 1,350 $cm^{-1}$ and a peak called G band present in the vicinity of 1,600 $cm^{-1}$. The D band shows a breathing vibration of the condensed ring structure, and the G band shows a stretching vibration of the carbon double bond. In a case where the heat treatment temperature is increased to about 1,500°C, the G band vibration is derived from the double bond of carbon in the six-membered ring structure and obtained as a sharp peak. However, at about 500°C to 1,000°C, the structures of the condensed rings are heterogenous, cyclic structures derived from aromatics and aliphatics are mixed, and the double bonds are stressed since the cyclic structures are not capable of being planar. As a result, a large number of peaks are generated and peaks are broadened.

Therefore, even in a case where a peak intensity in the D band and a peak intensity in the G band is simply compared as described in Japanese Patent No. 6077206, Japanese Patent No. 6210143, and Japanese Patent No. 4888411, the change in the carbonization state due to carbon impurities is not revealed, and thus it has not been sufficient to show the state of carbon. Japanese Patent No. 6288339 has focused on the intensity between valleys of a G band and a D band of the Raman spectrum, but the method described in Japanese Patent No. 6288339 is insufficient to indicate the state of carbon.

In addition, it is also difficult to compare peak areas as intensities since an optimal separation during peak separation is difficult due to the presence of a large number of broad peaks, and thus it has been difficult to examine an exact state of carbon.

The present invention has been made in consideration the above-described circumstances, and an object of the present invention is to provide a positive electrode material for a lithium ion secondary battery capable of obtaining a lithium ion secondary battery having a high discharge capacity and excellent cycle characteristics, a positive electrode for a lithium ion secondary battery using the positive electrode material, and a lithium ion secondary battery having the positive electrode.

As a result of intensive studies to solve the above-described problems, the present inventors have found that the following matters and found that the problems can be solved.

A valley in the vicinity of 1,400 to 1,550 cm$^{-1}$ between a D band and a G band was set as a V band. Since (minimum intensity of V band spectrum)/(peak intensity of G band) (V/G) is a value corresponding to a full width at half maximum of the G band, the homogeneity of carbon double bonds is determined. (peak intensity of D band)/(peak intensity of G band) (D/G) is determined by a ratio of a breathing vibration to a stretching vibration of a condensed ring structure. The carbonization state is calculated from D/G and V/G of a Raman spectrum. It has been found that the characteristics of the battery are improved by controlling the variation coefficients of D/G and V/G within a predetermined range.

The present invention has been completed based on such findings.

That is, the present invention is as defined in the appended claims.

According to the present invention, a positive electrode material for a lithium ion secondary battery capable of obtaining a lithium ion secondary battery having a high discharge capacity and excellent cycle characteristics, a positive electrode for a lithium ion secondary battery using the positive electrode material, and a lithium ion secondary battery having the positive electrode can be provided.

FIG.1 is a graph showing a plot of V/G (horizontal axis) versus D/G (vertical axis) of Raman spectral intensity ratios in Example 1.

FIG.2 is a graph showing a plot of V/G (horizontal axis) versus D/G (vertical axis) of Raman spectral intensity ratios in Comparative Example 2.

Positive electrode material for lithium ion secondary battery

A positive electrode material for a lithium ion secondary battery according to the present invention includes core particles represented by General Formula $Li_xA_yD_zPO_4$ (here, A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, $0.9 < x < 1.1$, $0 < y \leq 1$, $0 \leq z < 1$, and $0.9 < y+z < 1.1$) and a carbonaceous film coating a surface of the core particles, in which in a Raman spectrum analysis of the carbonaceous film, in a case where a peak intensity of a spectrum in a wave number band of 1,200 to 1,400 cm$^{-1}$ is set as a D value, a minimum intensity of the spectrum in the wave number band of 1,400 to 1,550 cm$^{-1}$ is set as a V value, and a peak intensity of the spectrum in the wave number band of 1,550 to 1,700 cm$^{-1}$ is set as a G value, an average value of D/G is 0.77 or more and 0.98 or less and an average value of V/G is 0.54 or more and 0.66 or less, and each of variation coefficients of D/G and V/G is 2% or less.

Hereinafter, the positive electrode material for a lithium ion secondary battery may be simply referred to as a positive electrode material. A positive electrode for a lithium ion secondary battery may be simply referred to as a positive electrode. A lithium ion secondary battery may be simply referred to as a battery.

Raman spectral characteristics

As described above, the carbonization degree of a carbonaceous film can be examined by a Raman spectrum. From a peak intensity (D value) of a spectrum in a wave number band of 1,200 to 1,400 cm$^{-1}$, a breathing vibration of a condensed ring structure of carbon constituting a carbonaceous film can be grasped. From a peak intensity (G value) of a spectrum in the wave number band of 1,550 to 1,700 cm$^{-1}$, a stretching vibration of a double bond of carbon constituting a carbonaceous film can be grasped.

In the present invention, attention has been paid to the minimum intensity (V value) of a spectrum in the wave number band of 1,400 to 1,550 cm$^{-1}$, and a method for improving battery characteristics from the relationship with the D value or G value has been found. Specifically, it has been found that a variation coefficient derived from V/G and an average value thereof indicating the homogeneity of the double bond of carbon and a variation coefficient derived from D/G and an average value thereof indicating the ratio of the breathing vibration to the stretching vibration of the condensed ring structure of carbon indicate the carbonization state of the carbonaceous film. In a case where each of the variation coefficients of D/G and the variation coefficient of V/G is 2% or less, the discharge capacity of the battery can be increased, and the cycle characteristics can be improved.

In a case where the average value of D/G exceeds 0.98, the cycle characteristics of the battery deteriorate. From the viewpoint of improving the cycle characteristics, the average value of D/G is preferably 0.98 or less, more preferably 0.95 or less, and still more preferably 0.92 or less.

In a case where the average value of D/G is less than 0.77, the rate characteristics of the battery deteriorate. From the viewpoint of improving the rate characteristics, the average value of D/G is preferably 0.77 or more, more preferably 0.79 or more, and still more preferably 0.81 or more.

In a case where the average value of V/G exceeds 0.66, the cycle characteristics of the battery deteriorate.

From the viewpoint of improving the cycle characteristics, the average value of V/G is preferably 0.66 or less, more preferably 0.64 or less, and still more preferably 0.62 or less.

In a case where the average value of V/G is less than 0.50, the rate characteristics of the battery deteriorate. From the viewpoint of improving the rate characteristics, the average value of V/G is preferably 0.50 or more, more preferably 0.52 or more, and still more preferably 0.54 or more.

Each of the variation coefficients of D/G and the variation coefficient of V/G is 2% or less.

When the variation coefficients of D/G and V/G exceed 2%, it means that D/G and V/G have a large distribution, and a voltage fall at a high rate and deterioration of the cycle characteristics occur.

From the viewpoint of further improving the discharge capacity of the battery and improving the cycle characteristics, the variation coefficient of D/G is preferably 0.2% or more and 2% or less, more preferably 0.4% or more and 1.95% or less, and still more preferably 0.6% or more and 1.9% or less.

From a similar viewpoint, the variation coefficient of V/G is preferably 0.2% or more and 2% or less, more preferably 0.4% or more and 1.95% or less, and still more preferably 0.6% or more and 1.9% or less.

Each variation coefficient CV is obtained from a standard deviation $\sigma$ and an average value xa according to Expression (1).

[Expression 1]

$$CV = \frac{\sigma}{x_a} \qquad (1)$$

The standard deviation $\sigma$ is obtained according to Expression (2), where xa is the average value of n pieces of data x.

[Expression 2]

$$\sigma = \sqrt{\frac{1}{n}\sum_{i=1}^{n}(x_i - x_a)^2} \qquad (2)$$

The variation coefficient of D/G is obtained as follows.

In a Raman spectrum analysis of the positive electrode material, for example, 300 points (n = 300) of D/G data (x = D/G) are measured, the average value of D/G is defined as xa, and the standard deviation $\sigma$ is obtained from Expression (1). From the obtained standard deviation $\sigma$ and the average value of D/G, the variation coefficient of D/G is obtained according to Expression (2). The variation coefficient of V/G is obtained in the same manner.

Core particle

In the positive electrode material according to the present invention, core particles are represented by General Formula $Li_xA_yD_zPO_4$ (here, A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, $0.9 < x < 1.1$, $0 < y \leq 1$, $0 \leq z < 1$, and $0.9 < y+z < 1.1$). Preferably primary particles including the core particles and an agglomerate of the primary particles are included as main components.

"The agglomerate" means secondary particles that are an agglomerate of primary particles.

More specifically, it is preferable the positive electrode material of the present invention includes core particles formed of a positive electrode active material represented by General Formula $Li_xA_yD_zPO_4$ and a carbonaceous film coating the surface of the core particles, and include the primary particles of a carbonaceous-film coated positive electrode active material and an agglomerate thereof as main components.

"Main components" means that the mass of the primary particles of carbonaceous-film coated positive electrode active material and the agglomerate thereof in the positive electrode material is 70% by mass or more, preferably 80% by mass or more, more preferably 90% by mass or more, and may be 100% by mass.

General Formula $Li_xA_yD_zPO_4$ has the following configuration from the viewpoint of high discharge capacity, high energy density, safety, and cycle stability.

A is at least one selected from the group consisting of Co, Mn, Ni, Fe, Cu and Cr. Among these, Mn and Fe are preferable, and Fe is more preferable.

D is at least one selected from the group consisting of Mg, Ca, Sr, Ba, Ti, Zn, B, Al, Ga, In, Si, Ge, Sc and Y.

Among these, Mg, Ca, Al, and Ti are preferable.

x is greater than 0.9 and less than 1.1 ($0.9 < x < 1.1$), and 1 is preferable.

y is greater than 0 and 1 or less ($0 < y \leq 1$), preferably 0.5 or more and 1 or less, and more preferably 1.

z is 0 or more and less than 1 ($0 \leq z < 1$), preferably 0 or more and 0.5 or less, and more preferably 0.

As for y and z, y + z is greater than 0.9 and less than 1.1 ($0.9 < y + z < 1.1$), and 1 is preferable.

The positive electrode active material represented by above General Formula preferably has an olivine structure, and LiFePO4 and Li $(Fe_{x1}Mn_{1-x1})$ $PO_4$ (here, $0 < x1 < 1$) in which a part of Fe's is substituted with Mn in LiFePO4 are more preferable.

As the positive electrode active material represented by General Formula, a positive electrode active material produced by conventional methods such as a solid phase method, a liquid phase method and a gas phase method can be used.

$Li_xA_yD_zPO_4$ is obtained, for example, by hydrothermally synthesizing a slurry-like mixture obtained by mixing a Li source, an A source, a D source, a P source, and water, and washing the resulting precipitate with water. In addition, a similar positive electrode active material can also be obtained by generating a positive electrode active material precursor by the hydrothermal synthesis and further calcinating the positive electrode active material precursor. It is preferable to use a pressure-resistant airtight container for the hydrothermal synthesis.

Here, examples of the Li source include lithium salts such as lithium acetate ($LiCH_3COO$) and lithium chloride (LiCl), lithium hydroxide (LiOH), and the like, and it is preferable to use at least one selected from the group consisting of lithium acetate, lithium chloride, and lithium hydroxide.

Examples of the A source include chlorides, carboxylates, and sulfates including at least one selected from the group consisting of Mn, Fe, Co, and Ni, and the like.

In a case where the A source is Fe, examples of the Fe source includes divalent iron chlorides such as iron (II) chloride ($FeCl_2$), iron (II) acetate ($Fe(CH_3COO)_2$), and iron (II) sulfate ($FeSO_4$), and it is preferable to use at least one selected from the group consisting of iron (II) chloride, iron (II) acetate, and iron (II) sulfate.

Similarly, as the D source, chlorides, carboxylates, sulfates, or the like of Mg, Ca, Sr, Ba, Ti, Zn, B, Al, Ga, In, Si, Ge, Sc, and Y, can be used.

Examples of the P source include phosphoric acid compounds such as phosphoric acid ($H_3PO_4$), ammonium dihydrogen phosphate ($NH_4H_2PO_4$), and diammonium hydrogen phosphate ($(NH_4)_2HPO_4$), and it is preferable to use at least one selected from the group consisting of phosphoric acid, ammonium dihydrogen phosphate, and diammonium hydrogen phosphate.

A material amount ratio (Li:A:D:P) of the Li source, A source, D source, and P source is appropriately selected so that a desired positive electrode active material is obtained and no impurities are generated.

The shape of the core particles is not particularly limited but is preferably spherical, and particularly truly spherical. In a case where the core particles are spherical, the internal micropores of the granulated granules are easy to be uniform, and a good electrolyte solution holding ability is exhibited. In addition, by using granules, the amount of solvent in case of preparing a paste for forming a positive electrode by using the positive electrode material of the present invention can be reduced, and the paste for forming a positive electrode can be easily painted to the current collector. The paste for forming a positive electrode can be prepared, for example, by mixing the positive electrode material of the present invention, a binder resin (binding agent), and a solvent.

Carbonaceous film

The carbonaceous film coating the core particles can be obtained, for example, by carbonizing an organic substance containing a saccharide and an ionic organic substance which are a raw material for the carbonaceous film.

As the saccharides, glucose, fructose, galactose, mannose, maltose, sucrose, lactose, cellulose, starch, gelatin, carboxymethylcellulose, methylcellulose, hydroxymethylcellulose, hydroxyethylcellulose, glycogen, pectin, alginic acid, glucomannan, chitin, hyaluronic acid, chondroitin, agarose, and the like are included. One type of saccharides may be used alone, and two or more types thereof may be mixed and used.

Examples of the ionic organic substances (excluding saccharides) include a polyacrylic acid, a polystyrene sulfonic acid, a polycarboxylic acid-based polymer, an alkylbenzene sulfonate, an alkyl sulfate, a carboxylic acid-modified polyvinyl alcohol salt, a sulfonic acid-modified polyvinyl alcohol salt, a polycarboxylate, a polyacrylate, a polymethacrylate, an ionic surfactant, and the like. One type of the ionic organic substances may be used alone, and two or more types thereof may be mixed and used.

Organic substances other than saccharides and ionic organic substances can be used. Organic substances other than such saccharides and ionic organic substances are not particularly limited as long as they are compounds capable of forming a carbonaceous film on the surface of the core particles. For example, a polyvinyl alcohol (PVA), a polyvinyl pyrrolidone, a polyacrylamide, a polyvinyl acetate, a polyether, a dihydric alcohol, a trihydric alcohol, a non-ionic surfactant, and the like can be suitably used.

One type of these organic substances other than such saccharides and ionic organic substances may be used alone, and two or more types thereof may be mixed and used.

In order to easily mix organic substance with the core particles and obtain a coating having a uniform carbonaceous film, the organic substance used is preferably solvent-soluble, and more preferably water-soluble in terms of ease of handling, safety, price, and the like.

The average particle diameter of the primary particles of the core particles (carbonaceous-film coated positive electrode active material) coated with the carbonaceous film is preferably 40 nm or more and 400 nm or less, more preferably 45 nm or more and 360 nm or less, and still more preferably 50 nm or more and 340 nm or less, and even still more preferably 60 nm or more and 340 nm or less.

In a case where the average particle diameter of the primary particles of the carbonaceous-film coated positive electrode active material is 40 nm or more, the amount of the binding agent necessary for forming positive electrode can be reduced, the amount of the positive electrode active material in the positive electrode is increased, and the capacity of the battery can be increased. Moreover, peeling of the carbonaceous film due to insufficient binding force can be suppressed.

On the other hand, in a case where the average particle diameter of primary particles of the carbonaceous-film coated positive electrode active material is 400 nm or less, sufficient high-speed charge and discharge performance can be obtained.

Here, the average particle diameter of primary particles is a number average particle diameter. The average particle diameter of primary particles can be determined by averaging particle diameters of 200 or more particles, which are measured by a scanning electron microscope (SEM) observation.

The thickness (average value) of the carbonaceous film coating the core particles is preferably 0.5 nm or more and 6 nm or less, more preferably 0.8 nm or more and 5 nm or less, and still more preferably 0.8 nm or more and 3 nm or less.

In a case where the thickness of the carbonaceous film is 0.5 nm or more, the increase of the total sum of the migration resistance of electrons in the carbonaceous film can be suppressed. Accordingly, the raise of the internal resistance of a lithium ion battery can be suppressed, and the voltage fall in a high-speed charge and discharge rate can be prevented.

On the other hand, in a case where the thickness of the carbonaceous film is 6 nm or less, the formation of steric hindrance that hinders lithium ions from diffusing in the carbonaceous film can be suppressed, thereby reducing the migration resistance of lithium ions. As a result, the raise of the internal resistance of a battery can be suppressed, and the voltage fall in a high-speed charge and discharge rate can be prevented.

The thickness of the carbonaceous film can be determined by photographing the carbonaceous-film coated positive electrode active material using a transmission electron microscope (TEM) or a scanning electron microscope (SEM), measuring the thickness of the carbonaceous film at 100 locations from the obtained cross-sectional image, and obtaining the average value thereof.

The coating ratio of the carbonaceous film with respect to the core particles is preferably 60% or more, and more preferably 80% or more. In a case where the coating ratio of the carbonaceous film is 60% or more, the coating effect of the carbonaceous film is fully acquired.

The coating ratio of the carbonaceous film can be determined by observing the carbonaceous-film coated positive electrode active material using a transmission electron microscope (TEM), an energy dispersive X-ray microanalyzer (EDX), or the like, calculating the ratio of a portion coating the surface of the positive electrode active material, and obtaining the average value thereof.

The density of the carbonaceous film is preferably 0.2 $g/cm^3$ or more and 2 $g/cm^3$ or less, and more preferably 0.5 $g/cm^3$ or more and 1.5 $g/cm^3$ or less. The density of the carbonaceous film is the mass per unit volume of the carbonaceous film.

In a case where the density of the carbonaceous film is 0.2 $g/cm^3$ or more, the carbonaceous film can exhibit sufficient electron conductivity. On the other hand, in a case where the density of the carbonaceous film is 2 $g/cm^3$ or less, there is a small amount of microcrystals of graphite having a layered structure in the carbonaceous film, and thus steric hindrance due to the microcrystals of graphite does not occur when lithium ions diffuse in the carbonaceous film. Accordingly, migration resistance of lithium ions does not increase. As a result, the internal resistance of the lithium ion battery does not increase, and the voltage fall in the high-speed charge and discharge rate of the lithium ion battery does not occur.

A carbon content of the positive electrode material (the carbon content contained in the positive electrode material) is preferably 0.9% by mass or more and 2.5% by mass or less, more preferably 0.9% by mass or more and 2.0% by mass or less, still more preferably 0.9% by mass or more and 1.8% by mass or less, and even still more preferably 1.0% by mass or more and 1.6% by mass or less.

In a case where the carbon content of the positive electrode material is 0.9% by mass or more, the electron conductivity can be sufficiently increased. On the other hand, in a case where the carbon content of the positive electrode material is 2.0% by mass or less, the electrode density can be sufficiently increased.

The carbon content of the positive electrode material can be measured using a carbon analyzer (for example, carbon sulfur analyzer: EMIA-810W manufactured by HORIBA, Ltd.).

The crystallite diameter of the positive electrode material analyzed by an X-ray diffraction measurement is preferably 40 nm or more and 200 nm or less.

In a case where the crystallite diameter of the positive electrode material is 40 nm or more, the amount of carbon necessary for sufficiently coating the surface of the core particles with the carbonaceous film can be suppressed, the amount of the binding agent can be suppressed, and thus it is possible to increase the capacity of the battery and increase the amount of the positive electrode active material therein. Moreover, peeling of the carbonaceous film due to insufficient binding force can be suppressed.

On the other hand, in a case where the crystallite diameter of the positive electrode material is 200 nm or less, the internal resistance of the positive electrode active material is suppressed, and the discharge capacity at a high-speed charge and discharge rate can be increased when a battery is formed.

The crystallite diameter of the positive electrode material is more preferably 50 nm or more and 180 nm or less, still more preferably 60 nm or more and 170 nm or less, and even still more preferably 70 nm or more and 160 nm or less.

The crystallite diameter of the positive electrode material can be calculated by a Scherrer's equation using a full width at half maximum of a diffraction peak on the (020) plane and a diffraction angle ($2\theta$) of an X-ray diffraction pattern of the powder, which are obtained by measuring with an X-ray diffractometer (for example, RINT2000, manufactured by Rigaku Corporation).

By controlling the cumulative particle size distribution of the positive electrode material containing the agglomerated particles described above, it is easy to reduce each of the variation coefficients of D/G and V/G to 2% or less and improve the characteristics of the battery.

The particle diameter (d10) having a cumulative percentage of 10% in a cumulative particle size distribution of the positive electrode material containing agglomerated particles described above is preferably 0.5 $\mu$m or more and 5 $\mu$m or less, more preferably 0.8 $\mu$m or more and 4 $\mu$m or less, and still more preferably 1.1 $\mu$m or more and 3 $\mu$m or less.

In a case where d10 is within the above range, the paste for forming a positive electrode can be painted to an aluminum current collector, the structure of a dried positive electrode mixture layer can be formed uniform, and thus local over voltage associated with charge and discharge reaction can be suppressed and an elution amount of metal can be reduced.

The particle diameter (d50) having a cumulative percentage of 50% in a cumulative particle size distribution of the positive electrode material containing agglomerated particles described above is preferably 2 $\mu$m or more and 12 $\mu$m or less, more preferably 3 $\mu$m or more and 10 $\mu$m or less, and still more preferably 3.5 $\mu$m or more and 9 $\mu$m or less.

In a case where d50 is within the above range, the paste for forming a positive electrode can be painted to an aluminum current collector, the structure of a dried positive electrode mixture layer can be formed uniform, and thus local over voltage associated with charge and discharge reaction can be suppressed and an elution amount of metal can be reduced.

In addition, the particle diameter (d90) having a cumulative percentage of 90% in a cumulative particle size distribution of the positive electrode material containing agglomerated particles described above is preferably 25 $\mu$m or less, more preferably 23 $\mu$m or less, and still more preferably 20 $\mu$m or less.

In a case where d90 is 20 $\mu$m or less, the agglomerated particle diameter does not become too large with respect to the thickness of the positive electrode mixture layer, the surface of the positive electrode mixture layer is less likely to be uneven, and the structure of the positive electrode mixture layer becomes uniform.

The lower limit value of d90 is not particularly limited but is preferably 7 $\mu$m or more.

Method for producing positive electrode material for lithium ion secondary battery

The method for producing a positive electrode material of the present invention is not particularly limited as long as the method is a method in which the positive electrode material includes core particles and a carbonaceous film coating the surface of the core particles and the Raman spectral characteristics described above can be obtained.

For example, the positive electrode material can be produced a method including; a first process of obtaining a slurry by mixing an organic substance containing a saccharide and an ionic organic substance which are a carbon source, one or more selected from a positive electrode active material and a positive electrode active material precursor, and a solvent; a second process of drying and granulating the slurry; a third step of removing the coarse particles by passing the granulated product obtained in the second step through a sieve having a mesh of 25 $\mu$m or more and 50 $\mu$m or less; and a fourth step of calcinating the granulated product obtained in the third step and carbonizing a carbon source.

First process

This process is a process of obtaining a slurry by mixing an organic substance containing a saccharide and an ionic organic substance which are a carbon source, one or more selected from a positive electrode active material and a positive electrode active material precursor, and a solvent.

As the saccharides, the organic substances other than saccharides, the positive electrode active material, and the positive electrode active material precursor, each of those described above can be used.

First, one or more selected from a positive electrode active material and a positive electrode active material precursor are dissolved or dispersed in a solvent to prepare a mixture. A method for dissolving or dispersing an organic substance and one or more selected from a positive electrode active material and a positive electrode active material precursor in a solvent is not particularly limited, but for example, dispersing devices such as a planetary ball mill, a vibration ball mill, a bead mill, a paint shaker, and an attritor can be used.

Examples of the solvent include water; alcohols such as methanol, ethanol, 1-propanol, 2-propanol (isopropyl alcohol: IPA), butanol, pentanol, hexanol, octanol, and diacetone alcohol; esters such as ethyl acetate, butyl acetate, ethyl lactate, propylene glycol monomethyl ether acetate, propylene glycol monoethyl ether acetate, and γ-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diehtylene glycol monoethyl ether; ketones such as acetone, methyl ethyl ketone (MEK), methyl isobutyl ketone (MIBK), acetylacetone and cyclohexanone; amides such as dimethyl formamide, N,N-dimethylacetoacetamide, and N-methyl-2-pyrrolidinone; and glycols such as ethylene glycol, diethylene glycol, and propylene glycol. One type of these solvents may be used, and two or more types thereof may be mixed and used. Among these solvents, a preferred solvent is water.

In addition, a dispersing agent may be added as necessary.

A formulation ratio of an organic substance and one or more selected from a positive electrode active material and a positive electrode active material precursor is preferably 0.5 parts by mass or more and 10 parts by mass or less, in terms of a carbon mass obtained from the organic substance, with respect to 100 parts by mass of an active material obtained from one or more selected from the positive electrode active material and the positive electrode active material precursor. The actual formulation amount varies depending on the amount of carbonization by heating carbonization (type of carbon source, carbonization conditions, or the like), but is generally about 1 to 8 parts by mass.

In addition, in a case where an organic substance and one or more selected from a positive electrode active material and a positive electrode active material precursor are dissolved or dispersed in solvent, it is preferable that one or more selected from the positive electrode active material and the positive electrode active material precursor are mixed with the organic substance and stirred after being dispersed in solvent.

Second process

This process is a process of drying and granulating the slurry.

A method for drying the slurry is not specifically limited, but for example, granulation drying methods such as spray drying, fluidized bed drying, and freeze-drying can be used.

For example, a granulated product can be obtained by drying and granulating a slurry from which impurities have been removed, using a spray dryer as the spray drying method.

Third process

This process is a process of removing the coarse particles by passing the granulated product obtained in the second step through a sieve having a mesh of 25 μm or more and 50 μm or less.

In a case where the coarse particles are removed from the granulated product and the particle diameter of the granulated product is made uniform before calcinating the granulated product in the fourth step to be described below, the non-uniform calcination of the organic substance coating the surface of the core particles is suppressed, and non-uniformity of the carbonization degree of the carbonaceous film can be suppressed. As a result, in a Raman spectrum of the positive electrode material, the distribution of D/G and V/G narrows, and each variation coefficient can be reduced to 2% or less.

It is preferable to further have a post-process of removing debris particles by passing the granulated product through a sieve of 2 μm or more and 10 μm or less after removing the coarse particles in the third process and before proceeding to the fourth process.

In a case where the debris particles in addition to the coarse particles are removed, the particle diameter of the granulated product is more easy to be uniform, the non-uniform calcination of the organic substance coating the surface of the core particles is further suppressed, and the non-uniformity of the carbonization degree of the carbonaceous film can be also suppressed. Accordingly, in a Raman spectrum of the positive electrode material, the distribution of D/G and V/G can further narrow, and each variation coefficient is easy to be reduced to 2% or less.

From the viewpoint of further suppressing the non-uniform calcination of the organic substance and the non-uniformity of the carbonization degree of the carbonaceous film, the mesh of a sieve for removing the coarse particles is preferably 30 $\mu$m or more and 45 $\mu$m or less, more preferably 32 $\mu$m or more and 42 $\mu$m or less.

From the viewpoint of further suppressing the non-uniformity of the carbonization degree of the carbonaceous film and from the viewpoint of work efficiency, the mesh of a sieve for removing the debris particles is preferably 3 $\mu$m or more and 8 $\mu$m or less, more preferably 4 $\mu$m or more and 6 $\mu$m or less.

Fourth process

This process is a process of calcinating the granulated product obtained in the third process and carbonizing the carbon source.

The calcination method is not specifically limited, but a furnace such as a tubular furnace, a rotary kiln, a roller hearth kiln, or the like can be used.

For example, in case of using a tubular furnace, by calcinating the granulated product sieved in the third process and having a uniform particle diameter at 600°C or higher and 1,000°C or lower, the non-uniform calcination of the organic substance coating the surface of the core particles is suppressed, and non-uniformity of the carbonization degree of the carbonaceous film can be suppressed.

In a case where the calcination temperature is 1,000°C or lower, the average value of D/G is easy to be 0.98 or less, the average value of V/G is easy to be 0.66 or less, and thus a battery having excellent cycle characteristics is easily produced.

In a case where the calcination temperature is 600°C or higher, the average value of D/G is easy to be 0.77 or more, the average value of V/G is easy to be 0.50 or more, and thus a battery having excellent rate characteristics is easily produced.

The calcination temperature is preferably 650°C or higher and 900°C or lower, more preferably 700°C or higher and 850°C or lower, and still more preferably 700°C or higher and 800°C or lower.

The calcination time of the granulated product is usually 1 to 24 hours, preferably 1 to 10 hours, more preferably 1 to 6 hours, and still more preferably 1 to 3 hours.

The calcination in the fourth process is preferably performed in a non-oxidative atmosphere. As the non-oxidative atmosphere, an inert atmosphere such as nitrogen ($N_2$) or argon (Ar) is preferable, and a reducing atmosphere containing a reducing gas such as hydrogen ($H_2$) of about several percentages by volume is preferable in a case where it is preferable to further suppress oxidation. In addition, in order to remove organic components evaporated in the non-oxidative atmosphere during heat treatment, a combustion-supporting or a combustible gas such as oxygen ($O_2$) may be introduced into the inert atmosphere.

Positive electrode for a lithium ion secondary battery

The positive electrode of the present invention is a positive electrode for a lithium ion secondary battery, including an electrode current collector and a positive electrode mixture layer formed on the electrode current collector, and the positive electrode mixture layer contains the above-described positive electrode material for a lithium ion secondary battery of the present invention.

More specifically, the positive electrode of an embodiment includes an electrode current collector formed of a metal foil and a positive electrode mixture layer formed on the electrode current collector, and the positive electrode mixture layer contains the positive electrode material for a lithium ion secondary battery of the present invention. That is, the positive electrode of the present embodiment is obtained by forming the positive electrode mixture layer on one main surface of the electrode current collector, using the positive electrode material for a lithium ion secondary battery of the present invention.

Since the positive electrode of the present invention includes the positive electrode material of the present invention, the lithium ion secondary battery using the positive electrode of the present invention has a high discharge capacity and excellent cycle characteristics.

In order to produce the positive electrode of the present invention, the positive electrode material described above, a binding agent constituted of a binder resin, and a solvent are mixed to prepare a coating material for forming a positive electrode or a paste for forming a positive electrode. At this time, conductive auxiliary agents such as carbon black, acetylene black, graphite, Ketjen black, a natural graphite, and an artificial graphite may be added as necessary.

As the binding agent, that is, the binder resin, for example, a polytetrafluoroethylene (PTFE) resin, a polyvinylidene fluoride (PVdF) resin, a fluororubber, or the like are suitably used.

The formulation ratio of the positive electrode material and the binder resin is not particularly limited, but for example, the binder resin is 1 part by mass or more and 30 parts by mass or less, and preferably 3 parts by mass or more and 20 parts by mass or less with respect to 100 parts by mass of the positive electrode material.

The solvent used for the coating material for forming a positive electrode or the paste for forming a positive electrode is suitably selected according to the property of the binder resin.

Examples of the solvent include water, alcohols such as methanol, ethanol, 1-propanol, 2-propanol (isopropyl alcohol: IPA), butanol, pentanol, hexanol, octanol, diacetone alcohol, esters such as ethyl acetate, butyl acetate, ethyl lactate, propylene glycol monomethyl ether acetate, propylene glycol monoethyl ether acetate, and γ-butyrolactone, ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diehtylene glycol monoethyl ether, ketones such as acetone, methyl ethyl ketone (MEK), methyl isobutyl ketone (MIBK), acetylacetone and cyclohexanone, amides such as dimethyl formamide, N,N-dimethylacetoacetamide, and N-methyl-2-pyrrolidinone (NMP), glycols such as ethylene glycol, diethylene glycol, and propylene glycol, and the like. One type of these solvents may be used alone, and two or more types thereof may be mixed and used.

Next, the coating material for forming a positive electrode or the paste for forming a positive electrode is coated on one surface of the metal foil, and then dried to obtain a metal foil in which a coating film containing a mixture of the above-described positive electrode material and the binder resin is formed on one surface.

Thereafter, the coating film is pressure-bonded and dried to prepare a current collector (positive electrode) having a positive electrode material layer on one surface of the metal foil.

Lithium ion secondary battery

The lithium ion secondary battery of the present invention includes a positive electrode, a negative electrode, and a non-aqueous electrolyte, and includes the above-described positive electrode for a lithium ion secondary battery of the present invention as the positive electrode. The battery using the positive electrode of the present invention has a high discharge capacity and excellent cycle characteristics.

In the battery of the present invention, a negative electrode, an electrolyte solution, a separator, and the like are not particularly limited. For example, as the negative electrode, a negative electrode material such as a metallic Li, a carbon material, a Li alloy, $Li_4Ti_{50}O_{12}$, and the like can be used. A solid electrolyte may be used instead of the electrolyte solution and the separator.

Examples

Hereinafter, the present invention will be specifically described with reference to Examples and Comparative Examples. The present invention is not limited to the aspects described in Examples.

For example, in the present embodiment, acetylene black is used as a conductive auxiliary agent, but carbon materials such as carbon black, graphite, Ketjen black, a natural graphite, and an artificial graphite may be used. In addition, batteries are evaluated using the natural graphite as the counter electrode, but naturally, other carbon materials such as an artificial graphite and coke, metal negative electrodes such as a metallic Li and a Li alloy, and oxide-based negative electrode materials such as $Li_4Ti_5O_{12}$ may be used. In addition, a mixture of ethylene carbonate and ethylmethyl carbonate in a volume ratio of 3: 7, which contains 1 mol/L $LiPF_6$ as a non-aqueous electrolyte (non-aqueous electrolyte solution) is used, but $LiBF_4LiClO_4$ or the like may be used instead of $LiPF_6$, or propylene carbonate, diethyl carbonate or the like may be used instead of ethylene carbonate. In addition, a solid electrolyte may be used instead of the electrolyte solution and the separator.

Production Example: Production of positive electrode active material ($LiFePO_4$)

$LiFePO_4$ was synthesized by hydrothermal synthesis as follows.

LiOH was used as a Li source, $NH_4H_2PO_4$ was used as a P source, and $FeSO_4 \cdot 7H2O$ was used as an Fe source (raw material of A in General Formula). These were mixed in pure water so that the mass ratio was to be Li:Fe:P = 3:1:1, and 200 ml of a uniform slurry mixture was prepared.

Subsequently, this mixture was put into a pressure-resistant airtight container having a capacity of 500 mL, and hydrothermal synthesis was performed at 170°C for 12 hours. After the reaction, the reaction mixture was cooled to room temperature (25°C) to obtain a precipitated cake-like reaction product. The precipitate was sufficiently washed several times with distilled water and kept at a moisture content of 30% so as not to be dried, and the cake-like product was obtained. A small amount of the cake-like product was collected and vacuum-dried at 70°C for 2 hours. The powder obtained was measured with an X-ray diffractometer (product name: RINT2000, manufactured by Rigaku Corporation), and it has been confirmed that LiFePO4 with a single phase is formed.

Example 1

20 g of $LiFePO_4$ (positive electrode active material) obtained in Production Example and 0.73 g of sucrose as a carbon source were mixed in water so that a total amount thereof was to be 100 g, pulverized and mixed in a bead mill together with 150 g of 0.1 mmφ zirconia beads, and then a slurry (mixture) having a dispersed particle diameter (d50) of 100 nm was obtained (first process).

Subsequently, the obtained slurry was dried and granulated using a spray dryer at 60°C which was the temperature at an exit of the dryer (second process).

The obtained granulated powder was passed through a sieve having a mesh of 38 μm to remove the coarse particles (third step), and then the debris particles were removed with a sieve of 5 μm (post-process).

Thereafter, using the tubular furnace, the granulated powder was heat-treated (calcination) at a temperature of 770°C for 2 hours to obtain a positive electrode material formed of a carbonaceous-film coated electrode active material (fourth process).

It is noted that the carbonaceous-film coated electrode active material is formed of core particles formed of $LiFePO_4$ and a carbonaceous film and has a structure in which the surface of the core particles is coated with the carbonaceous film.

Example 2

A positive electrode material formed of the carbonaceous-film coated active material was obtained in the same manner as in Example 1 except that the calcination temperature of the tubular furnace was 730°C.

Example 3

A positive electrode material formed of the carbonaceous-film coated active material was obtained in the same manner as in Example 1 except that the debris particles were not removed with a sieve having a mesh of 5 μm (the post-process was not performed).

Example 4

A positive electrode material formed of the carbonaceous-film coated active material was obtained in the same manner as in Example 2 except that the dispersion with the bead mill was performed until the dispersed particle diameter (d50) reached 60 nm.

Example 5

A positive electrode material formed of the carbonaceous-film coated active material was obtained in the same manner as in Example 1 except that the dispersion with the bead mill was performed until the dispersed particle diameter (d50) reached 200 nm.

Comparative Example 1

A positive electrode material formed of the carbonaceous-film coated active material was obtained in the same manner as in Example 1 except that the calcination temperature of the tubular furnace was 850°C.

Comparative Example 2

A positive electrode material formed of the carbonaceous-film coated active material was obtained in the same manner as in Example 1 except that the granulated powder obtained by a spray dryer was calcinated in the tubular furnace without sieving (neither the third process nor the post-process was performed).

Comparative Example 3

A positive electrode material formed of the carbonaceous-film coated active material was obtained in the same manner as in Example 1 except that the calcination temperature of the tubular furnace was 600°C.

Production of lithium ion battery

The positive electrode material obtained in Examples and Comparative Examples, acetylene black (AB) as a conductive auxiliary agent, and polyvinylidene fluoride (PVdF) resin as a binding agent were mixed in N-methylpyrrolidone (NMP) at a mass ratio of positive electrode material:AB:PVdF = 90:5:5 to obtain a paste for forming a positive electrode.

The obtained paste was coated on an aluminum foil having a thickness of 30 μm, dried, and then pressure-bonded to a predetermined density to obtain an electrode plate. The obtained electrode plate was punched into a plate shape having a coated surface area of 3 × 3 cm$^2$ and having a tab margin therearound, and the tab was welded to prepare a test electrode.

On the other hand, a coated electrode coated with a natural graphite was used for the counter electrode.

As the separator, a porous polypropylene film was employed.

In addition, a 1 mol/L lithium hexafluorophosphate (LiPF$_6$) solution was used as a non-aqueous electrolyte (non-aqueous electrolyte solution). As a solvent used for this LiPF$_6$ solution, a solvent in which ethylene carbonate and diethyl carbonate were mixed at a ratio of 1:1 on a volume basis and added with 1% by mass of vinylene carbonate as an additive was used.

Then, a laminate type cell was produced as the battery of Examples and Comparative Examples by using the test electrode produced as described above, the counter electrode, and the non-aqueous electrolyte.

Evaluation of positive electrode material

The physical properties of the positive electrode materials obtained in Examples and Comparative Examples and the components contained in the positive electrode materials were evaluated. The evaluation method is as follows. The results are shown in Table 1.

(1) Raman spectral characteristics

A Raman spectrum of the positive electrode material was measured using a Raman microscope (manufactured by HORIBA Ltd., Raman microscope XploRAPLUS). The measurement wavelength was 532 nm, and the measurement was performed between 600 and 2,000 cm$^{-1}$.

A peak intensity (peak height) of the spectrum in a wave number band of 1,200 to 1,400 cm$^{-1}$ as a D value, a minimum intensity (bottom height) of the spectrum in the wave number band of 1,400 to 1,550 cm$^{-1}$ as a V value, and a peak intensity (peak height) of the spectrum in the wave number band of 1,550 to 1,700 cm$^{-1}$ as a G value were calculated.

Each value was measured at 300 points in different fields of view of the same sample, D/G and V/G were calculated at each measurement point, and the average thereof was calculated. The obtained D/G and the average value thereof and the obtained V/G and the average value thereof were applied to the above-described Expressions (1) and (2) to calculate the variation coefficient of D/G and the variation coefficient of V/G.

(2) Particle size distribution of positive electrode active material

The positive electrode material was dispersed in water, and the particle size distribution of the positive electrode material contained in the dispersion liquid was measured using a particle size distribution meter (trade name: LA-920, manufactured by HORIBA, Ltd.) by a method equivalent to JISZ8825 "particle size analysis-laser diffraction/scattering method".

(3) Carbon content of positive electrode material

The carbon content (% by mass) of the positive electrode material was measured using a carbon analyzer (manufactured by HORIBA, Ltd., carbon sulfur analyzer: EMIA-810W).

(4) Crystallite diameter of positive electrode material

An X-ray diffraction pattern of the powder of the positive electrode material was measured with an X-ray diffractometer (product name: RINT2000, manufactured by Rigaku Corporation). The crystallite diameter (nm) of the positive electrode material was calculated by a Scherrer's equation using a full width at half maximum of a diffraction peak on the (020) plane and a diffraction angle (2θ) of an X-ray diffraction pattern of the powder.

Evaluation of positive electrode and lithium ion battery

Using the lithium ion battery obtained in Examples and Comparative Examples, the discharge capacity and the capacity retention by the cycle test were measured by the following methods. The cut-off voltage was 2.5 to 3.7 V (vs carbon negative electrode). The results are shown in Table 1.

(1) Discharge capacity

The discharge capacity was measured by constant current charge and discharge at an ambient temperature of 25°C with a charge current of 1 C and a discharge current of 10 C.

The allowable range is 112 mAh/g or more.

(2) Capacity retention

The discharge capacity was measured by constant current charge and discharge at an ambient temperature of 25°C with a charge current of 2 C and a discharge current of 2 C, and the measured value was taken as an initial discharge capacity. Thereafter, the ambient temperature was set to 45°C, and constant current charge and discharge was performed 600 times with a charge current of 2 C and a discharge current of 2 C. Thereafter, the discharge capacity was measured again by constant current charge and discharge at an ambient temperature of 25°C with a charge current of 2 C and a discharge current of 2 C to obtain a discharge capacity after cycle.

The capacity retention by the cycle test was calculated as follows, cycle test capacity retention = discharge capacity after cycle/initial discharge capacity.

The allowable range is 74% or more.

[Table 1]

| | D/G | Variation coefficient of D/G | V/G | Variation coefficient of v/G | Calcination temperature (°C) | Particle size distribution | | | Carbon content | Crystallite diameter | 10 C discharge capacity (mAh/g) | Capacity retention @ 600 cycles in the cycle test (%) |
|---|---|---|---|---|---|---|---|---|---|---|---|---|
| | | | | | | d10 ($\mu$m) | d50 ($\mu$m) | D90 ($\mu$m) | | | | |
| Example 1 | 0.92 | 0.9% | 0.65 | 1.2% | 770 | 2.5 | 6.2 | 13.5 | 1.1 | 86 | 115 | 77 |
| Example 2 | 0.85 | 0.6% | 0.60 | 0.9% | 730 | 2.7 | 6.8 | 14.8 | 1.2 | 79 | 114 | 78 |
| Example 3 | 0.91 | 1.9% | 0.63 | 1.8% | 770 | 1.6 | 4.4 | 10.3 | 1.1 | 88 | 115 | 77 |
| Example 4 | 0.81 | 1.4% | 0.54 | 1.8% | 730 | 2.3 | 6.2 | 13.4 | 1.2 | 75 | 113 | 79 |
| Example 5 | 0.98 | 1.6% | 0.65 | 1.4% | 770 | 2.2 | 8.2 | 18.9 | 1.2 | 153 | 118 | 75 |
| Comparative Example 1 | 1.00 | 0.8% | 0.67 | 1.0% | 850 | 2.4 | 6.3 | 14.2 | 1.0 | 90 | 111 | 73 |
| Comparative Example 2 | 0.90 | 2.5% | 0.62 | 2.3% | 770 | 1.6 | 10.7 | 24.7 | 1.1 | 87 | 105 | 75 |
| Comparative Example 3 | 0.75 | 1. 3%- | 0.49 | 1.2% | 600 | 2.3 | 6.2 | 13.8 | 1.3 | 72 | 95 | 78 |

Summary of results

The positive electrode materials of Examples have the Raman spectral characteristics in which an average D/G is 0.77 to 0.98 and an average V/G is 0.50 to 0.66, and in which each of the variation coefficients of D/G and V/G is 2% or less. The batteries using these positive electrode materials had a high discharge capacity and excellent cycle characteristics.

On the other hand, the battery produced using the positive electrode material of Comparative Example 1, in which the average D/G and the average V/G exceed the predetermined upper limit of the present invention, did not fall within the allowable range although the discharge capacity was relatively large, and the capacity retention in the cycle test was decreased.

The battery produced using the positive electrode material of Comparative Example 3, in which the average D/G and the average V/G are lower than the predetermined lower limit of the present invention had large capacity retention in the cycle test, but had a reduced discharge capacity.

The battery produced using the positive electrode material of Comparative Example 2, in which both the variation coefficient of D/G and the variation coefficient of V/G exceeded 2%, had a large capacity retention in the cycle test but had a small discharge capacity.

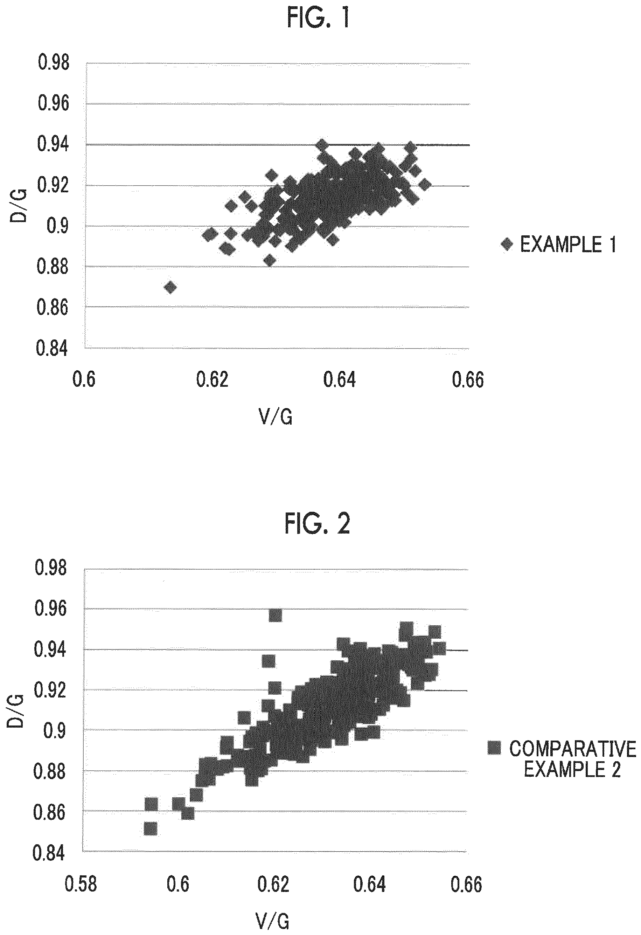

In FIG. 1 and FIG. 2, a graph showing a plot of V/G (horizontal axis) versus D/G (vertical axis) of Raman spectral intensity ratios is shown. FIG. 1 shows the result of Example 1, and FIG. 2 shows the result of Comparative Example 2.

In Example 1 of FIG. 1, the plot of D/G and V/G is summarized, and it can be seen that the variation is small. On the other hand, in Comparative Example 2 of FIG. 2, the plot of D/G and V/G is scattered, and it can be seen that the variation is large.

The lithium ion secondary battery using the positive electrode material for a lithium ion secondary battery of the present invention has a high discharge capacity and excellent cycle characteristics, and thus can contribute greatly to the improvement of the reliability of lithium ion secondary batteries for applications including mobile devices.

**Claims**

1.   A positive electrode material for a lithium ion secondary battery, the positive electrode material comprising:

core particles represented by General Formula $Li_xA_yD_zPO_4$ (here, A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, $0.9 < x < 1.1$, $0 < y \leq 1$, $0 \leq z < 1$, and $0.9 < y+z < 1.1$); and
a carbonaceous film coating a surface of the core particles,

wherein in a Raman spectrum analysis of the carbonaceous film, in a case where a peak intensity of a spectrum in a wave number band of 1,200 to 1,400 cm$^{-1}$ is set as a D value, a minimum intensity of the spectrum in a wave number band of 1,400 to 1,550 cm$^{-1}$ is set as a V value, and a peak intensity of the spectrum in a wave number band of 1,550 to 1,700 cm$^{-1}$ is set as a G value, an average value of D/G is 0.77 or more and 0.98 or less and an average value of V/G is 0.54 or more and 0.66 or less, and each of variation coefficients of the D/G and the V/G is 2% or less, wherein the Raman spectrum and the variation coefficients are measured and analyzed in accordance with the method described in the description.

2.   The positive electrode material for a lithium ion secondary battery according to claim 1, wherein primary particles including the core particles, and an agglomerate of the primary particles are included as main components.

3.   The positive electrode material for a lithium ion secondary battery according to claim 1 or 2, wherein a carbon content is 0.9% by mass or more and 2.5% by mass or less.

4.   The positive electrode material for a lithium ion secondary battery according to any one of Claims 1 to 3, wherein a crystallite diameter analyzed by an X-ray diffraction measurement in accordance with the method described in the description is 40 nm or more and 200 nm or less.

5.   A positive electrode for a lithium ion secondary battery, the positive electrode comprising:

an electrode current collector; and
a positive electrode mixture layer formed on the electrode current collector,

wherein the positive electrode mixture layer contains the positive electrode material for a lithium ion secondary battery according to any one of Claims 1 to 4.

6. A lithium ion secondary battery comprising:

a positive electrode;
a negative electrode; and
a non-aqueous electrolyte,
wherein the positive electrode for a lithium ion secondary battery according to claim 5 is included as the positive electrode.

**Patentansprüche**

1. Positive Elektrode-Material für einen Lithiumionenakkumulator, wobei das positive Elektrode-Material umfasst:

Kernteilchen, dargestellt durch die allgemeine Formel $Li_xA_yD_zPO_4$ (hier stellt A mindestens ein Element, ausgewählt aus der Gruppe, bestehend aus Co, Mn, Ni, Fe, Cu und Cr, dar, D stellt mindestens ein Element, ausgewählt aus der Gruppe, bestehend aus Mg, Ca, Sr, Ba, Ti, Zn, B, Al, Ga, In, Si, Ge, Sc und Y, dar, wobei $0,9 < x < 1,1$, $0 < y \leq 1$, $0 \leq z < 1$ und $0,9 < y+z < 1,1$); und
einen kohlenstoffhaltigen Film, der eine Oberfläche der Kernteilchen beschichtet,
wobei in einer Raman-Spektrumanalyse des kohlenstoffhaltigen Films in einem Fall, in dem eine Peakintensität eines Spektrums in einem Wellenzahlband von 1200 bis 1400 $cm^{-1}$ als ein D-Wert festgelegt ist, eine minimale Intensität des Spektrums in einem Wellenzahlband von 1400 bis 1550 $cm^{-1}$ als ein V-Wert festgelegt ist und eine Peakintensität des Spektrums in einem Wellenzahlband von 1550 bis 1700 $cm^{-1}$ als ein G-Wert festgelegt ist, ein Durchschnittswert von D/G 0,77 oder mehr und 0,98 oder weniger berägt und ein Durchschnittswert von V/G 0,54 oder mehr und 0,66 oder weniger beträgt und jeder der Variationskoeffizienten des D/G und des V/G 2% oder weniger beträgt, wobei das Raman-Spektrum und die Variationskoeffizienten in Übereinstimmung mit dem in der Beschreibung beschriebenen Verfahren gemessen und analysiert werden.

2. Positive Elektrode-Material für einen Lithiumionenakkumulator nach Anspruch 1, wobei Primärteilchen, beinhaltend die Kernteilchen, und ein Agglomerat der Primärteilchen als Hauptkomponenten beinhaltet sind.

3. Positive Elektrode-Material für einen Lithiumionenakkumulator nach Anspruch 1 oder 2, wobei ein Kohlenstoffgehalt 0,9 Massen-% oder mehr und 2,5 Massen-% oder weniger beträgt.

4. Positive Elektrode-Material für einen Lithiumionenakkumulator nach einem der Ansprüche 1 bis 3, wobei ein Kristallitdurchmesser, der durch eine Röntgenbeugungsmessung in Übereinstimmung mit dem in der Beschreibung beschriebenen Verfahren analysiert wird, 40 nm oder mehr und 200 nm oder weniger beträgt.

5. Positive Elektrode für einen Lithiumionenakkumulator, wobei die positive Elektrode umfasst:

einen Elektrodenstromkollektor; und
eine auf dem Elektrodenstromkollektor gebildete positive Elektrode-Gemischschicht,
wobei die positive Elektrode-Gemischschicht das positive Elektrode-Material für einen Lithiumionenakkumulator nach einem der Ansprüche 1 bis 4 enthält.

6. Lithiumionenakkumulator, umfassend:

eine positive Elektrode;
eine negative Elektrode; und
einen nichtwässrigen Elektrolyten,
wobei die positive Elektrode für einen Lithiumionenakkumulator nach Anspruch 5 als die positive Elektrode beinhaltet ist.

**Revendications**

1. Matériau d'électrode positive pour une batterie secondaire aux ions lithium, le matériau d'électrode positive comprenant :

   des particules de noyau représentées par la Formule Générale $Li_xA_yD_zPO_4$ (ici A représente au moins un élément sélectionné parmi le groupe consistant en Co, Mn, Ni, Fe, Cu et Cr, D représente au moins un élément sélectionné parmi le groupe consistant en Mg, Ca, Sr, Ba, Ti, Zn, B, Al, Ga, In, Si, Ge, Sc, et Y, $0,9 < x < 1,1$, $0 < y \leq 1$, $0 \leq z < 1$, et $0,9 < y + z < 1,1$); et
   un film carboné enrobant la surface des particules de noyau,
   dans lequel, dans un analyse du spectre de Raman du film carboné, dans le cas où une intensité de crête d'un spectre dans un gamme de nombre d'ondes de 1200 à 1400 cm$^{-1}$ est établie en tant que valeur D, une intensité minimale du spectre dans une gamme de nombre d'onde de 1400 à 1550 cm$^{-1}$ est établie en tant que valeur V, et une intensité de crête du spectre de la gamme de nombre d'onde de 1550 à 1700 cm$^{-1}$ est établie en tant que valeur G, une valeur moyenne de D/G est 0,77 ou plus et 0,98 ou moins et une valeur moyenne de V/G est 0,54 ou plus et 0,66 ou moins, et chacun des coefficients de variation des D/G et des V/G est de 2% ou moins, dans lequel le spectre de Raman et les coefficients de variation sont mesurés et analysés selon la méthode stipulée dans la description.

2. Matériau d'électrode positive pour une batterie secondaire aux ions lithium selon la revendication 1, dans lequel des particules primaires comprenant des particules de noyau, ainsi qu'un agglomérat des particules primaires, sont inclus en tant que composants principaux.

3. Matériau d'électrode positive pour une batterie secondaire aux ions lithium selon la revendication 1 ou 2, dans lequel la teneur en carbone est de 0,9% en masse ou plus, et de 2,5% en masse ou moins.

4. Matériau d'électrode positive pour une batterie secondaire aux ions lithium selon l'une quelconque des revendications 1 à 3, dans lequel le diamètre de cristallite analysé par mesure par diffraction de rayons X selon la méthode stipulée dans la description, est de 40 nm ou plus et de 200 nm ou moins.

5. Électrode positive pour une batterie secondaire aux ions lithium, l'électrode positive comprenant :

   un collecteur de courant d'électrode; et
   une couche mixte d'électrode positive formée sur le collecteur de courant d'électrode,
   dans lequel la couche mixte d'électrode positive contient le matériau d'électrode positive pour une batterie secondaire aux ions lithium selon l'une quelconque des revendications 1 à 4.

6. Batterie secondaire aux ions lithium, comprenant:

   une électrode positive ;
   une électrode négative ; et
   un électrolyte non aqueux,
   dans laquelle l'électrode positive pour une batterie secondaire aux ions lithium selon la revendication 5, est incluse en tant qu'électrode positive.

## FIG. 1

## FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6077206 B
- JP 6210143 B
- JP 4888411 B
- JP 6288339 B
- CN 103247778 A
- EP 3291343 A1

**Non-patent literature cited in the description**

- **QIU SHEN.** *J. Mater. Sci.: Mater. Electron.,* 2016, vol. 27, 7255-7264